# EUROPÄISCHE PATENTANMELDUNG

(11) **EP 4 485 590 A1**
(43) Veröffentlichungstag der Anmeldung: **01.01.2025**
(21) Anmeldenummer: 24182728.6
(22) Anmeldetag: 18.06.2024
(51) Int. Cl.: H01M 8/0612

(54) **ELEKTROCHEMISCHE VORRICHTUNG, INSBESONDERE BRENNSTOFFZELLENVORRICHTUNG**

(30) Priorität: 29.06.2023 DE 102023206126
(71) Anmelder: Robert Bosch GmbH, 70442 Stuttgart (DE)
(72) Erfinder: Schweitzer, Bertram, 73732 Esslingen (DE); Maus, Felix, 70825 Korntal-Muenchingen (DE); Colle, Katharina, 70437 Stuttgart (DE); Flaemig, Melanie, 70469 Stuttgart (DE); Keller, Ralf, 66539 Neunkirchen (DE); Gerundt, Oliver, 71292 Friolzheim (DE); Gonzalez-Baquet, Tania, 71638 Ludwigsburg (DE); Bachhuber, Frank, 70199 Stuttgart (DE); Stahl, Thorsten, 71336 Waiblingen (DE); Obermeyer, Sebastian, 77830 Buehlertal (DE)

(57) **Zusammenfassung**

Die Erfindung betrifft eine elektrochemische Vorrichtung (1), insbesondere Brennstoffzellenvorrichtung (10), umfassend eine Medienführungseinheit (50) und einen Reformer (26). Die Erfindung zeichnet sich dadurch aus, dass der Reformer (26) ein Gehäuseteil (52) und ein Katalysatorbauteil (54) umfasst, wobei das Gehäuseteil (52) an der Medienführungseinheit (50) angebracht ist und wobei das Katalysatorbauteil (54) austauschbar angeordnet ist.

## Beschreibung

Die vorliegende Erfindung betrifft Elektrochemische Vorrichtung, insbesondere Brennstoffzellenvorrichtung, umfassend eine Medienführungseinheit und einen Reformer.

### Stand der Technik

Das Dokument DE 10 2021 214 810 A1 offenbart eine elektrochemische Vorrichtung, konkret eine Brennstoffzellenvorrichtung, mit einer Medienführungseinheit und einem Reformer.

### Offenbarung der Erfindung

Die vorliegende Erfindung mit den Merkmalen des Hauptanspruchs hat demgegenüber den Vorteil, dass der Reformer ein Gehäuseteil und ein Katalysatorbauteil umfasst, wobei das Gehäuseteil an der Medienführungseinheit angebracht ist und wobei das Katalysatorbauteil austauschbar angeordnet ist. Dadurch wird die Wartungsfreundlichkeit erhöht.

Durch die in den Unteransprüchen aufgeführten Merkmale sind vorteilhafte Weiterbildungen der Erfindung nach dem Hauptanspruch möglich. So ist es von Vorteil, wenn das Gehäuseteil einen zylindrisch ausgebildeten Abschnitt und/oder einen konisch ausgebildeten Abschnitt aufweist, wodurch eine vorteilhafte Realisierung ermöglicht wird.

Auch ist es von Vorteil, wenn das Katalysatorbauteil ein, insbesondere zylindrisch ausgebildetes, vorzugsweise zu dem Gehäuseteil korrespondierendes, Katalysatorgehäuse und/oder ein Katalysatormaterial umfasst, wodurch ebenfalls eine vorteilhafte Realisierung ermöglicht wird.

Von Vorteil ist es auch, wenn die Medienführungseinheit zumindest ein Tiefziehteil umfasst, wobei das Gehäuseteil, insbesondere der zylindrisch ausgebildete Abschnitt des Gehäuseteils, an dem zumindest einen Tiefziehteil angebracht, vorzugsweise angeschweißt, ist. Dadurch wird eine dichte Ausgestaltung ermöglicht.

Vorteilhaft ist es, wenn der Reformer, insbesondere das Gehäuseteil und/oder das Katalysatorbauteil, derart ausgebildet ist, dass das Gehäuseteil, insbesondere der zylindrisch ausgebildete Abschnitt des Gehäuseteils, das Katalysatorbauteil aufzunehmen vermag, wodurch eine stabile Ausgestaltung ermöglicht wird.

Vorteilhaft ist es auch, wenn der Reformer, insbesondere das Gehäuseteil und/oder das Katalysatorbauteil, derart ausgebildet ist, dass das Katalysatorbauteil, insbesondere von einer der Medienführungseinheit zugewandten Seite, in das Gehäuseteil, insbesondere den zylindrisch ausgebildeten Abschnitt des Gehäuseteils, eingebracht, vorzugsweise eingelegt, werden kann, wodurch ein besonders einfacher und schneller Austausch des Katalysatorbauteils ermöglicht wird.

Auch ist es vorteilhaft, wenn das Gehäuseteil einen Anschlag für das Katalysatorbauteil umfasst, insbesondere der konisch ausgebildete Abschnitt des Gehäuseteils als Anschlag für das Katalysatorbauteil fungiert, wodurch ein vereinfachtes Einbringen des Katalysatorbauteils in das Gehäuseteil ermöglicht wird.

Von Vorteil ist es auch, wenn das Katalysatorbauteil, insbesondere das Katalysatorgehäuse, an der Medienführungseinheit, insbesondere an dem zumindest einen Tiefziehteil, vorzugsweise über eine formschlüssige Verbindung, befestigt ist. Dadurch kann die Stabilität zusätzlich erhöht werden.

Besonders vorteilhaft ist es, wenn das Katalysatorbauteil, insbesondere das Katalysatorgehäuse, und/oder die Medienführungseinheit, insbesondere das zumindest eine Tiefziehteil, Mittel, insbesondere Laschen und/oder Gewinde, zum Befestigen, insbesondere für eine formschlüssige Verbindung, vorzugsweise für eine Schraubverbindung, aufweisen. Dadurch kann eine besonders stabile Ausgestaltung ermöglicht werden.

Vorteilhaft ist es auch, wenn die Medienführungseinheit eine, insbesondere öffenbare und/oder verschließbare, Durchführung zum Durchführen des Katalysatorbauteils aufweist, wodurch eine vereinfachte Zugänglichkeit ermöglicht wird.

Besonders vorteilhaft ist es, wenn die Medienführungseinheit zumindest eine planare Platte umfasst, wobei die Durchführung in der planaren Platte ausgebildet ist. Dadurch kann eine Ausgestaltung mit einer besonders vorteilhaften Zugänglichkeit realisiert werden.

Besonders vorteilhaft ist es auch, wenn die Medienführungseinheit einen Deckel zum Verschließen der Durchführung aufweist, wobei insbesondere zwischen dem Deckel und der Medienführungseinheit, vorzugsweise der planaren Platte, eine Dichtung angeordnet ist. Dadurch kann eine besonders sichere Ausgestaltung realisiert werden.

### Zeichnungen

In den Zeichnungen sind Ausführungsbeispiele der Erfindung schematisch dargestellt und in der nachfolgenden Beschreibung näher erläutert. Es zeigen
- Fig. 1: ein schematisches Schaltbild eines Ausführungsbeispiels einer elektrochemischen Vorrichtung,
- Fig. 2: eine perspektivische Darstellung eines Ausführungsbeispiels eines Teils der elektrochemischen Vorrichtung aus Fig. 1,
- Fig. 3: eine Querschnittsdarstellung des Ausführungsbeispiels des Teils der elektrochemischen Vorrichtung aus Fig. 2,
- Fig. 4: eine Querschnittsdarstellung eines weiteren Ausführungsbeispiels des Teils der elektrochemischen Vorrichtung aus Fig. 2.

### Beschreibung der Ausführungsbeispiele

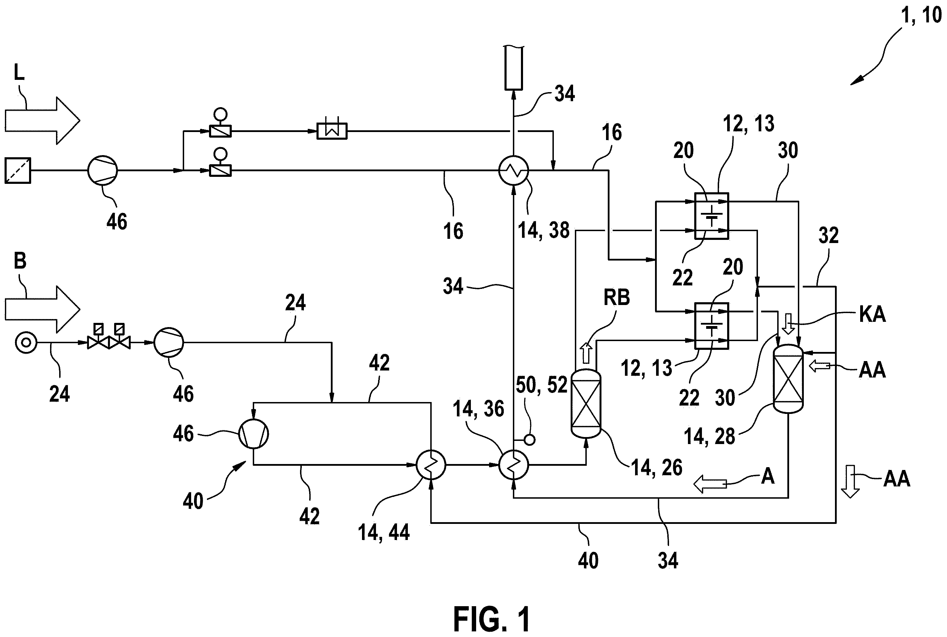

In Fig. 1 ist ein schematisches Schaltbild eines Ausführungsbeispiels einer elektrochemischen Vorrichtung 1 gezeigt. Unter einer "elektrochemischen Vorrichtung" kann vorliegend insbesondere eine Vorrichtung verstanden werden, welche dazu vorgesehen ist, chemische Energie in elektrische Energie oder umgekehrt umzuwandeln. Eine elektrochemische Vorrichtung kann beispielsweise ein Brennstoffzellensystem sein, welche insbesondere die Umwandlung eines Brennstoffs, z.B. Wasserstoff, in elektrische Energie ermöglicht, oder ein Elektrolysezellenvorrichtung, welche insbesondere die Umwandlung von elektrischer Energie in chemische Energie, vorzugsweise zur Speicherung, ermöglicht.

Bei dem in Fig. 1 gezeigten Ausführungsbeispiel der elektrochemischen Vorrichtung 1 handelt es sich um eine Brennstoffzellenvorrichtung 10. So wird die Erfindung vorliegend am Beispiel der gezeigten Brennstoffzellenvorrichtung 10, ohne auf dieses beschränkt zu sein, näher erläutert.

Die Brennstoffzellenvorrichtung 10 umfasst zwei Brennstoffzelleneinheiten 12. Die Brennstoffzelleneinheiten 12 sind in dem gezeigten Ausführungsbeispiel als Brennstoffzellenstacks 13 ausgeführt, welche eine Vielzahl von Brennstoffzellen aufweisen. Im vorliegenden Fall handelt es sich bei den Brennstoffzellen um Festoxidbrennstoffzellen (englisch: Solid Oxide Fuel Cell, SOFC). Alternativ wäre es aber auch möglich, dass es sich bei den Brennstoffzellen um Polymerelektrolytbrennstoffzellen (englisch: Polymer Electrolyte Fuel Cell, PEFC), bzw. Protonenaustauschmembran-Brennstoffzellen (englisch: Proton Exchange Membrane Fuel Cell, PEMFC), handelt.

Des Weiteren umfasst die Brennstoffzellenvorrichtung 10 eine Vielzahl von Prozessoreinheiten 14. Unter einer "Prozessoreinheit" kann vorliegend insbesondere eine Einheit oder Komponente der Brennstoffzellenvorrichtung 10 verstanden werden, bei der es sich nicht um eine Brennstoffzelleneinheit 12, bzw. eine Brennstoffzelle und/oder einen Brennstoffzellenstack, handelt. Insbesondere handelt es sich bei der Prozessoreinheit 14 um eine zur, vorzugsweise chemischen und/oder thermischen, Vor- und/oder Nachbereitung zumindest eines in einer Brennstoffzelleneinheit umzusetzenden und/oder umgesetzten Mediums, wie beispielsweise eines Brennstoffs B, RB, einer Luft L und/oder eines Abgases A, AA. Bevorzugt handelt es sich bei einer Prozessoreinheit 14 um einen Reformer 26, einen Nachbrenner 28 und/oder einen Wärmeübertrager 36, 38, 44.

In dem gezeigten Ausführungsbeispiel wird, beispielsweise in einem Normalbetrieb, über eine Luftzuführung 16 Luft L jeweils einem Kathodenraum 20 der Brennstoffzelleneinheiten 12 zugeführt, während jeweils einem Anodenraum 22 reformierter Brennstoff RB, im vorliegenden Wasserstoff, zugeführt wird. In den Brennstoffzelleneinheiten 12 wird der reformierte Brennstoff RB durch Mitwirkung von Sauerstoff aus der Luft L unter Hervorbringung von Strom und Wärme elektrochemisch umgesetzt.

Dabei umfasst die Brennstoffzellenvorrichtung 10 eine Prozessoreinheit 14, im gezeigten Fall einen Reformer 26. Der Reformer 26 ist dazu vorgesehen, einen der Brennstoffzellenvorrichtung 10, im gezeigten Fall über eine Brennstoffzuführung 24, zugeführten Brennstoff B, im vorliegenden Fall Methan (CH₄) enthaltendes Erdgas, für die elektrochemische Umsetzung in den Brennstoffzelleneinheiten 12 in den reformierten Brennstoff RB, im vorliegenden Fall ein Wasserstoff (H₂) enthaltendes Gemisch, umzuwandeln.

Darüber hinaus sind die Brennstoffzelleneinheiten 12 abgasseitig mit einer weiteren Prozessoreinheit 14, im vorliegenden Fall mit einem Nachbrenner 28, verbunden. Dem Nachbrenner 28 werden die Abgase der Brennstoffzelleneinheiten 12 zugeführt, im vorliegenden Fall Kathodenabgas KA über eine Kathodenabgasführung 30 und ein Teil des Anodenabgas AA über eine Anodenabgasführung 32. Das Kathodenabgas KA enthält unverbrauchte Luft L, bzw. unverbrauchten Sauerstoff, während das Anodenabgas AA ggf. nicht-umgesetzten, reformierten Brennstoff RB und/oder ggf. nicht-reformierten Brennstoff B enthält. Mittels des Nachbrenners 28 wird das Anodenabgas AA, bzw. der ggf. darin enthaltene nicht-umgesetzte, reformierte Brennstoff RB und/oder der ggf. darin enthaltende nicht-reformierte Brennstoff B, unter Beimischung des Kathodenabgases KA, bzw. des darin enthaltenen Sauerstoffs der Luft L, verbrannt.

Das bei der Verbrennung im Nachbrenner 28 entstehende heiße Abgas A wird über eine Abgasführung 34 und über eine weitere Prozessoreinheit 14, im vorliegenden Fall über einen Wärmeübertrager 36, vom Nachbrenner 28 abgeführt. Der Wärmeübertrager 36 ist dabei wiederum mit dem Reformer 26 strömungstechnisch verbunden, sodass Wärme von dem heißen Abgas A auf den dem Reformer 26 zugeführten Brennstoff B übertragen werden kann. Entsprechend kann die Wärme des heißen Abgases A für die Reformierung des zugeführten Brennstoffs B im Reformer 26 genutzt werden.

Des Weiteren befindet sich in der Abgasführung 34 stromabwärts des Wärmeübertragers 36 eine weitere Prozessoreinheit 14, im vorliegenden Fall ein weiterer Wärmeübertrager 38. Der Wärmeübertrager 38 ist dabei wiederum mit der Luftzuführung 16 strömungstechnisch verbunden, sodass die verbleibende Wärme des heißen Abgases A auf die zugeführte Luft L in der Luftzuführung 16 zu übertragen werden kann. Entsprechend kann die verbleibende Wärme des heißen Abgases für ein Vorwärmen der zugeführten Luft L in der Luftführung 16 genutzt werden.

Darüber hinaus weist die Brennstoffzellenvorrichtung 10 eine Rückführung 40 auf, mittels welcher ein Teil des Anodenabgas AA aus der Anodenabgasleitung 32 abgezweigt und einer einen Rezirkulationskreis 40 bildenden Rezirkulationsleitung 42 zugeführt werden kann. Dabei passiert das abgezweigte Anodenabgas AA eine weitere Prozessoreinheit 14, im vorliegenden Fall einen weiteren Wärmeübertrager 44.

Mittels des Rezirkulationskreises 40, bzw. der Rezirkulationsleitung 42, kann der abgezweigte Teil des Anodenabgas AA dem jeweiligen Anodenraum 22 der Brennstoffzelleneinheiten 12 und/oder dem Reformer 26 rückgeführt, bzw. erneut zugeführt, werden, sodass der ggf. im abgezweigten Anodenabgas AA enthaltene, nicht-umgesetzte, reformierte Brennstoff RB im Nachgang in der Brennstoffzelleneinheit 12 umgesetzt und/oder der ggf. im abgezweigten Anodenabgas AA enthaltene, nicht-reformierte Brennstoff B im Nachgang im Reformer 26 reformiert werden kann. Dadurch kann der Wirkungsgrad der Brennstoffzellenvorrichtung 10 weiter erhöht werden. Zudem kann über die Brennstoffzuführleitung 24 frischer Brennstoff B dem im Rezirkulationskreis 40 rezirkuliertem, abgezweigten Anodenabgas AA beigemischt werden. Mittels des weiteren Wärmeübertragers 44 kann dann zur thermischen Aufbereitung Wärme von dem abgezweigten Anodenabgas AA aus der Rückführleitung 38 auf das durch die Beimischung des frischen Brennstoffs B entstehende Brennstoffgemisch im Rezirkulationskreis 40 übertragen werden.

Über Verdichter 46 in den jeweiligen Leitungen, kann die Zufuhr von Luft L in der Luftzuführung 16, die Zufuhr von Brennstoff B in der Brennstoffzuführung 24 und die Rezirkulationsrate der Medien im Rezirkulationskreis 40 geregelt und/oder aufeinander abgestimmt werden.

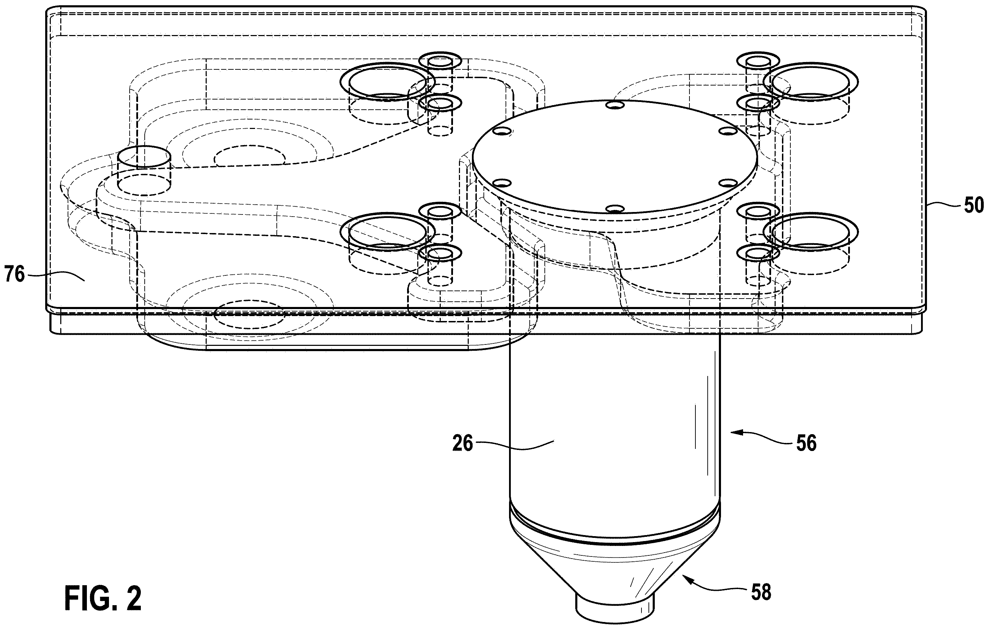

Die in Fig. 2 bis Fig. 4 dargestellten Vorrichtungen und Bauteile stellen nun eine Möglichkeit zur konstruktionstechnischen Umsetzung eines Teiles der in Fig. 1 schematisch dargestellten elektrochemischen Vorrichtung 1, bzw. Brennstoffzellenvorrichtung 10, dar und dienen der Veranschaulichung der vorliegenden Erfindung. Konstruktionstechnische Ausgestaltungen von weiteren Komponenten sind dem Fachmann aus dem Stand der Technik bekannt und werden zur Wahrung der Übersichtlichkeit in den Figuren nicht näher dargestellt.

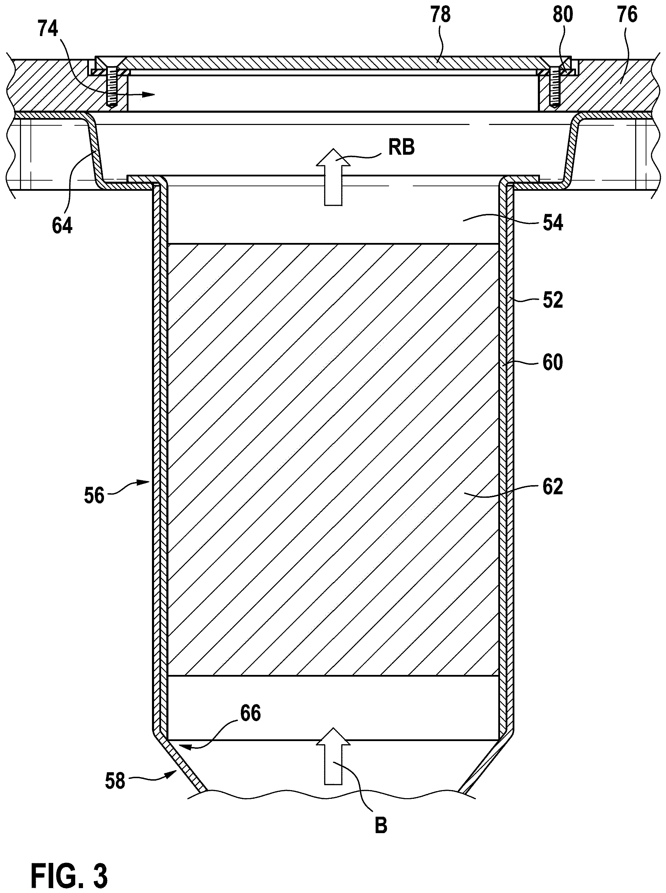

In Fig. 2 ist eine perspektivische Darstellung, sowie in Fig. 3 eine Querschnittsdarstellung, eines Ausführungsbeispiels eines Teils der elektrochemischen Vorrichtung 1, bzw. der Brennstoffzellenvorrichtung 10, aus Fig. 1 gezeigt. Dieser umfasst eine Medienführungseinheit 50 und den Reformer 26.

Die Medienführungseinheit 50 ist dazu vorgesehen Medien zu zumindest einer Brennstoffzelleneinheit 12 zu führen und/oder von einer Brennstoffzelleneinheit 12 abzuführen. In dem gezeigten Ausführungsbeispiel ist die Medienführungseinheit 50 dazu vorgesehen ein erstes Medium, wie beispielsweise den reformierten Brennstoff RB, zu zumindest einer Brennstoffzelleneinheit 12 zu führen und ein zweites Medium, wie beispielsweise das Kathodenabgas KA, von zumindest einer Brennstoffzelleneinheit 12 abzuführen. In dem gezeigten Ausführungsbeispiel ist die Medienführungseinheit 50 auch dazu vorgesehen die Medien über die Zumindest eine Brennstoffzelleneinheit 12, im gezeigten Fall über die Vielzahl der, bzw. die zwei, Brennstoffzelleneinheiten 12, und/oder über die zumindest eine Prozessoreinheit 14, im gezeigten Fall über die Vielzahl der Prozessoreinheiten 14, zu verteilen. Entsprechend kann die Medienführungseinheit 50 auch als Verteilereinheit verstanden werden.

Die vorliegende elektrochemische Vorrichtung 1, bzw. Brennstoffzellenvorrichtung 10, zeichnet sich nun dadurch aus, dass der Reformer 26 ein Gehäuseteil 52 und ein Katalysatorbauteil 54 umfasst, wobei das Gehäuseteil 52 an der Medienführungseinheit 50 angebracht ist und wobei das Katalysatorbauteil 54 austauschbar angeordnet ist. Dadurch wird die Wartungsfreundlichkeit erhöht.

In dem gezeigten Ausführungsbeispiel weist das Gehäuseteil einen zylindrisch ausgebildeten Abschnitt 56 und/oder einen konisch ausgebildeten Abschnitt 58 auf.

Das Katalysatorbauteil 54 wiederum, umfasst ein, im gezeigten Fall zylindrisch ausgebildetes, vorliegend zu dem Gehäuseteil 52 korrespondierendes, Katalysatorgehäuse 60 und ein Katalysatormaterial 62. Das Katalysatormaterial 62 ist dazu vorgesehen, die Reaktionsgeschwindigkeit der Reformierungsreaktion bei der Reformierung des dem Reformer zugeführten Brennstoffes B zu erhöhen.

In dem gezeigten Ausführungsbeispiel ist das Katalysatormaterial 62 in das Katalysatorgehäuse 60 eingebracht. Das Katalysatormaterial 62 füllt in dem gezeigten Fall einen Großteil des Katalysatorgehäuses 60 aus. Vorliegend ist das Katalysatormaterial 62 zylindrisch ausgebildet. Insbesondere ist es so ausgebildet, dass es (nicht näher dargestellte) Strömungsführungen aufweist, sodass der zu reformierende Brennstoff B das Katalysatormaterial 62 passieren kann.

Die Medienführungseinheit 50 umfasst in dem gezeigten Ausführungsbeispiel zumindest ein Tiefziehteil 64, wobei das Gehäuseteil 52, vorliegend der zylindrisch ausgebildete Abschnitt 62 des Gehäuseteils 52, an dem zumindest einen Tiefziehteil 64 angebracht, im gezeigten Fall angeschweißt, ist. Dadurch wird eine Dichte Ausgestaltung des Reformers 26 ermöglicht.

Der Reformer ist hängend an der Medienführungseinheit 50, im vorliegenden Fall dem Tiefziehteil 64, angebracht. So wird eine thermische Ausdehnung nach unten ermöglicht.

Der Reformer 26, vorliegend das Gehäuseteil 52 und das Katalysatorbauteil 54, ist in dem gezeigten Ausführungsbeispiel derart ausgebildet, dass das Gehäuseteil 52, in dem gezeigten Fall der zylindrisch ausgebildete Abschnitt 56 des Gehäuseteils 52, das Katalysatorbauteil 54 aufzunehmen vermag, bzw. aufnimmt. Dadurch wird eine stabile Ausgestaltung ermöglicht.

In dem gezeigten Ausführungsbeispiel ist der Reformer 26, in dem gezeigten Fall das Gehäuseteil 52 und das Katalysatorbauteil 54, derart ausgebildet, dass das Katalysatorbauteil 52, vorliegend von einer der Medienführungseinheit 50 zugewandten Seite, in das Gehäuseteil 52, vorliegend in den zylindrisch ausgebildeten Abschnitt 56 des Gehäuseteils 58, eingebracht, vorliegend eingelegt, werden kann. Dadurch wird ein besonders einfacher und schneller Austausch des Katalysatorbauteils 54 ermöglicht.

Im vorliegenden Fall umfasst das Gehäuseteil 52 einen Anschlag 66 für das Katalysatorbauteil 54. Konkret fungiert in dem gezeigten Ausführungsbeispiel der konisch ausgebildete Abschnitt 58 des Gehäuseteils 52 als Anschlag 66 für das Katalysatorbauteil 54 fungiert. Dadurch wird ein vereinfachtes Einbringen des Katalysatorbauteils 54 in das Gehäuseteil ermöglicht.

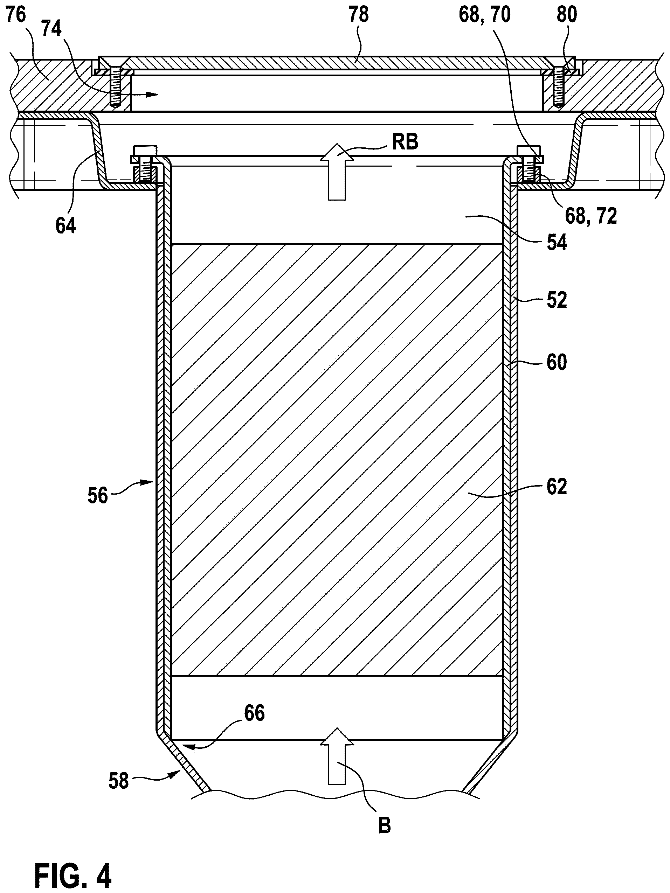

In Fig. 4 ist eine Querschnittsdarstellung eines weiteren Ausführungsbeispiels des Teils der elektrochemischen Vorrichtung 1 aus Fig. 2 gezeigt. Im Unterschied, zu dem in Fig. 3 gezeigten Ausführungsbeispiel, ist das Katalysatorbauteil 54, im gezeigten Fall das Katalysatorgehäuse 60, an der Medienführungseinheit 50, bzw. an dem zumindest einen Tiefziehteil 64, vorliegend über eine formschlüssige Verbindung, befestigt. Dadurch kann die Stabilität zusätzlich erhöht werden.

In dem in Fig. 4 gezeigten Fall handelt es sich bei der formschlüssigen Verbindung um eine Schraubverbindung. So weist das Katalysatorbauteil 54, vorliegend das Katalysatorgehäuse 60, Mittel 68, im gezeigten Fall Laschen 70, für die Schraubverbindung, mit der Medienführungseinheit 50, bzw. dem Tiefziehteil 64, auf. Die Medienführungseinheit 50, bzw. das Tiefziehteil 64, wiederum weist, im gezeigten Fall auf einer der Medienführungseinheit 50 zugewandten Seite, ebenfalls Mittel 68, vorliegend ein Gewinde 72, für die Schraubverbindung auf. Dadurch wird eine besonders stabile Ausgestaltung ermöglicht. Darüber hinaus ist es auch möglich die formschlüssige Verbindung zu lösen und ggf. wieder herzustellen, wodurch ein vorteilhafter Austausch bei einer Wartung weiterhin möglich ist.

In den gezeigten Ausführungsbeispiel weist die Medienführungseinheit 50 eine, insbesondere öffenbare und/oder verschließbare, Durchführung 74 zum Durchführen des Katalysatorbauteils 54 auf. Dadurch wird eine vereinfachte Zugänglichkeit ermöglicht.

In den gezeigten Ausführungsbeispielen umfasst die Medienführungseinheit 50 zumindest eine planare Platte 76, wobei die Durchführung 74 in der planaren Platte 76 ausgebildet ist. Dadurch kann eine besonders vorteilhafte Zugänglichkeit realisiert werden.

In den gezeigten Ausführungsbeispielen weist die Medienführungseinheit 50 einen Deckel 78 zum Verschließen der Durchführung 74 auf, wobei in dem gezeigten Fall zwischen dem Deckel 78 und der Medienführungseinheit 80, im vorliegenden Fall der planaren Platte 76, eine Dichtung 80 angeordnet ist. Dadurch kann eine besonders sichere Ausgestaltung realisiert werden.

In den gezeigten Fällen ist der Deckel 80 über eine Schraubverbindung mit der Medienführungseinheit 50, bzw. der planaren Platte 76, verbunden. Alternativ wäre es aber auch möglich, dass der Deckel 80 durch die auf die Medienführungseinheit 50, bzw. die planare Platte 76, aufgebrachten Brennstoffzelleneinheiten 12, bzw. Brennstoffzellenstacks 13, gegen die Medienführungseinheit 50, bzw. die planare Platte 76, angepresst wird. Dadurch kann die Teilevielfalt reduziert werden.

## Patentansprüche

1. Elektrochemische Vorrichtung (1), insbesondere Brennstoffzellenvorrichtung (10), umfassend eine Medienführungseinheit (50) und einen Reformer (26), **dadurch gekennzeichnet, dass** der Reformer (26) ein Gehäuseteil (52) und ein Katalysatorbauteil (54) umfasst, wobei das Gehäuseteil (52) an der Medienführungseinheit (50) angebracht ist und wobei das Katalysatorbauteil (54) austauschbar angeordnet ist.

2. Elektrochemische Vorrichtung (1) nach Anspruch 1, **dadurch gekennzeichnet, dass** das Gehäuseteil (52) einen zylindrisch ausgebildeten Abschnitt (56) und/oder einen konisch ausgebildeten Abschnitt (58) aufweist.

3. Elektrochemische Vorrichtung (1) nach einem der vorhergehenden Ansprüche, **dadurch gekennzeichnet, dass** das Katalysatorbauteil (54) ein, insbesondere zylindrisch ausgebildetes, vorzugsweise zu dem Gehäuseteil (52) korrespondierendes, Katalysatorgehäuse (60) und/oder ein Katalysatormaterial (62) umfasst.

4. Elektrochemische Vorrichtung (1) nach einem der vorhergehenden Ansprüche, **dadurch gekennzeichnet, dass** die Medienführungseinheit (50) zumindest ein Tiefziehteil (64) umfasst, wobei das Gehäuseteil, insbesondere der zylindrisch ausgebildete Abschnitt des Gehäuseteils (64), an dem zumindest einen Tiefziehteil (64) angebracht, vorzugsweise angeschweißt, ist.

5. Elektrochemische Vorrichtung (1) nach einem der vorhergehenden Ansprüche, **dadurch gekennzeichnet, dass** der Reformer (26), insbesondere das Gehäuseteil (52) und/oder das Katalysatorbauteil (54), derart ausgebildet ist, dass das Gehäuseteil (60), insbesondere der zylindrisch ausgebildete Abschnitt (56) des Gehäuseteils (52), das Katalysatorbauteil (54) aufzunehmen vermag.

6. Elektrochemische Vorrichtung (1) nach einem der vorhergehenden Ansprüche, **dadurch gekennzeichnet, dass** der Reformer (26), insbesondere das Gehäuseteil (52) und/oder das Katalysatorbauteil (54), derart ausgebildet ist, dass das Katalysatorbauteil (54), insbesondere von einer der Medienführungseinheit (50) zugewandten Seite, in das Gehäuseteil (52), insbesondere den zylindrisch ausgebildeten Abschnitt (56) des Gehäuseteils (60), eingebracht, vorzugsweise eingelegt, werden kann.

7. Elektrochemische Vorrichtung (1) nach einem der vorhergehenden Ansprüche, **dadurch gekennzeichnet, dass** das Gehäuseteil (52) einen Anschlag (66) für das Katalysatorbauteil (54) umfasst, insbesondere der konisch ausgebildete Abschnitt (58) des Gehäuseteils (52) als Anschlag (66) für das Katalysatorbauteil (54) fungiert.

8. Elektrochemische Vorrichtung (1) nach einem der vorhergehenden Ansprüche, **dadurch gekennzeichnet, dass** das Katalysatorbauteil (54), insbesondere das Katalysatorgehäuse (60), an der Medienführungseinheit (50), insbesondere an dem zumindest einen Tiefziehteil (64), vorzugsweise über eine formschlüssige Verbindung, befestigt ist.

9. Elektrochemische Vorrichtung (1) nach Anspruch 8, **dadurch gekennzeichnet, dass** das Katalysatorbauteil (54), insbesondere das Katalysatorgehäuse (60), und/oder die Medienführungseinheit (50), insbesondere das zumindest eine Tiefziehteil (64), Mittel (68), insbesondere Laschen (70) und/oder Gewinde (72), zum Befestigen, insbesondere für eine formschlüssige Verbindung, vorzugsweise für eine Schraubverbindung, aufweisen.

10. Elektrochemische Vorrichtung (1) nach einem der vorhergehenden Ansprüche, **dadurch gekennzeichnet, dass** die Medienführungseinheit (50) eine, insbesondere öffenbare und/oder verschließbare, Durchführung (74) zum Durchführen des Katalysatorbauteils (54) aufweist.

11. Elektrochemische Vorrichtung (1) nach Anspruch 10, **dadurch gekennzeichnet, dass** die Medienführungseinheit (50) zumindest eine planare Platte (76) umfasst, wobei die Durchführung (74) in der planaren Platte (76) ausgebildet ist.

12. Elektrochemische Vorrichtung (1) nach einem der Ansprüche 10 oder 11, **dadurch gekennzeichnet, dass** die Medienführungseinheit (50) einen Deckel (78) zum Verschließen der Durchführung (74) aufweist, wobei insbesondere zwischen dem Deckel (78) und der Medienführungseinheit (50), vorzugsweise der planaren Platte (76), eine Dichtung (80) angeordnet ist.
